# EUROPEAN PATENT SPECIFICATION

(11) **EP 2 266 389 B1**
(45) Date of publication and mention of the grant of the patent: **21.06.2017**
(21) Application number: 09163692.8
(22) Date of filing: 25.06.2009
(51) Int. Cl.: A01G 3/053

(54) **Cutting tools**
Schneidewerkzeuge
Outil de coupe

(43) Date of publication of application: 29.12.2010
(73) Proprietor: ROBERT BOSCH GMBH, 70442 Stuttgart (DE)
(72) Inventor: Beadman, Robert, Stowmarket, Suffolk IP14 2AU (GB); Fowles, Andrew, Colchester, Essex Longridge Park (GB); Heywood, Peter, Norton, Suffolk IP31 3LE (GB)

(56) References cited:
- EP-A2- 0 750 835
- WO-A1-2008/101140
- DE-A1- 3 816 362
- US-A1- 2005 009 659

## Description

The present invention relates to cutting tools, in particular to vegetation cutting tools, more particularly to vegetation cutting tools such as hedgecutters (also referred to as hedgetrimmers). More specifically, the present invention relates to a drive arrangement for the blades of cutting tool such as a hedgecutter.

Hedgecutters comprise two elongate blades which reciprocate with respect to each other. Either one blade is fixed and the other caused to reciprocate or both blades caused to reciprocate in an equal and opposite manner. The blades are driven by means of a cam element driven by the output shaft of an electric motor or small engine. One such cutter is described in JP2005269972, which hedge cutter also includes a switch allowing the user to reverse the direction of motion of one of the blades.

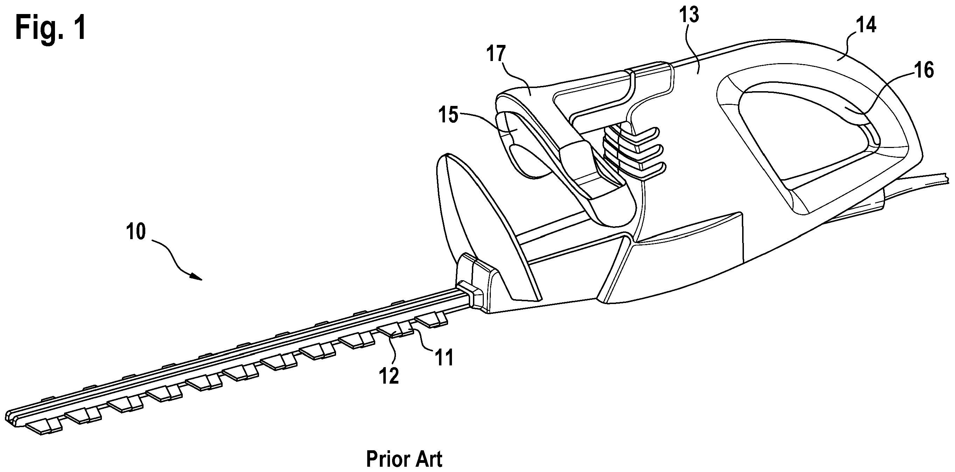

Figure 1 shows a typical prior art electric hedgecutter 10. The hedgecutter has a bottom blade 11 and upper blade 12 caused to reciprocate simultaneously and in an equal and opposite manner with respect to the housing and hence also to each other by means of an electric motor housed in a housing unit 13. The housing unit 13 includes two grips 14,15, each associated with a switch arrangement 16,17. This switching configuration provides a safety feature requiring both left and right hands of the operator to be in position and actuating their respective switches in order to supply an electric current to the motor. Accordingly, the blades cannot be put into an operating configuration unless both hands are away from the blades. The motor, typically a series motor in the case of a corded product or a permanent magnet motor in the case of a cordless product, acts to reciprocate the moving blades 11, 12 through suitable gearing as required, typically a spur gear reduction drive, acting on an eccentric pair converting the rotational motion of the gear reduction drive to linear blade motions.

The eccentric-drives on both corded and cordless hedgecutters generally follow two types of construction. They are typically either fabricated having a central rotor and separate eccentric discs such as our earlier application EP0750835 or a single piece rotor and eccentrics combined. In the case of separate eccentric discs, torque must be transmitted from the rotor to the discs, which thus necessitates a large eccentric size. The high rubbing speeds produce increased wear and energy losses and therefore reduce cutting capability. A single piece rotor and eccentrics construction allows smaller eccentric diameters and reduces the above losses. However, the difficulty in producing these can result in high production costs and limit the stroke of the blades.

On corded and cordless hedgecutters, each of the reciprocating blades (typical both blades reciprocate) must be guided to stay on their associated eccentric. It is common that a spacer is fitted between the blades. It is common that a sub-assembly be made of eccentric, drive gear, shaft and other fixings, to ensure the blades stay in engagement with their respective eccentrics. Such a sub-assembly is mounted in plain bearings and is therefore able to float in the bearings, the position being determined by the blade. This variable position is usually accommodated by the mesh between the motor pinion and the gear.

The geartrains on cordless hedgecutters fall into single-stage or two-stage spur categories. With a single-stage spur, it can be difficult to achieve a low enough number of teeth on the motor-pinion with the result that gear ratios are limited. Additionally, with a spur gear construction, the pinion is overhung, cantilever fashion, on the motor shaft. However, DC permanent magnet motors as would be used on cordless products have small diameter shafts and their capacity to carry such a cantilevered load or a radial load is limited.

WO 2008/101140 describes a hedgecutter in accordance with the preamble of claim 1.

The present invention seeks to overcome the problems in the prior art cutting tools.

In its broadest sense, the present invention provides a cutting apparatus comprising a housing, a blade assembly comprising at least one reciprocatable blade and an eccentric rotor comprising an eccentric associated with each of said at least one reciprocatable blades; and an electric motor adapted to drive said eccentric rotor; wherein the apparatus further comprises a planetary gear adapted to transfer motion to the eccentric rotor; wherein the eccentric rotor comprises a shaft having upper and lower shaft portions carrying each of said eccentrics therebetween; wherein the eccentric rotor includes a bearing on each of the upper and lower shaft portions; and wherein the at least one reciprocatable blade, rotor and bearings are formed as a demountable blade unit.

Preferably, the housing is adapted to support the bearings and permit axial movement of the eccentric rotor within the housing.

Preferably, the bearings are rolling element bearings.

Preferably, the bearings are pressed on to the respective shaft portions.

Preferably, the eccentric rotor is formed as a single piece rotor.

Preferably, the planetary gear includes an output element which output element and upper shaft portion of rotor include mutually cooperating male and female spline elements. More preferably, the upper shaft portion of rotor includes a male spline element and the output element includes a female spline element.

Preferably, the male and female spline elements are adapted to allow axial movement therebetween.

Preferably, the planetary gear is a multiple stage planetary gear, more preferably a two-stage planetary gear.

Preferably, the planetary gear has an output stage having a planetary carrier which is permitted axial movement within the planetary gear output stage.

Preferably, the apparatus further comprises a battery adapted to supply power to the motor, more preferably a permanent magnet DC motor.

Advantageously, the apparatus is in the form of a hedge trimmer or hedge cutter.

The above and other aspects of the present invention will now be described in further detail, by way of example only, with reference to the accompanying drawings, in which:
- Figure 1: is a perspective view of a prior art hedgecutter;
- Figure 2: is a part cross-sectional view of an embodiment of a cutting tool in accordance with the present invention in the form of a hedgecutter;
- Figure 3: is a perspective part cross-sectional view of the drive assembly of the hedgecutter of Figure 2;
- Figure 4: is an exploded perspective view of the motor assembly and gearbox upper housing member of the hedgecutter of Figure 2;
- Figure 5: is an exploded perspective view of the first stage of the two-stage planetary gearbox of the hedgecutter of Figure 2;
- Figure 6: is an exploded view of the second stage of the gearbox of the embodiment of Figure 2 together with upper housing unit; and
- Figure 7: is an exploded perspective view of the blade and eccentric assembly of the hedgecutter of Figure 2;

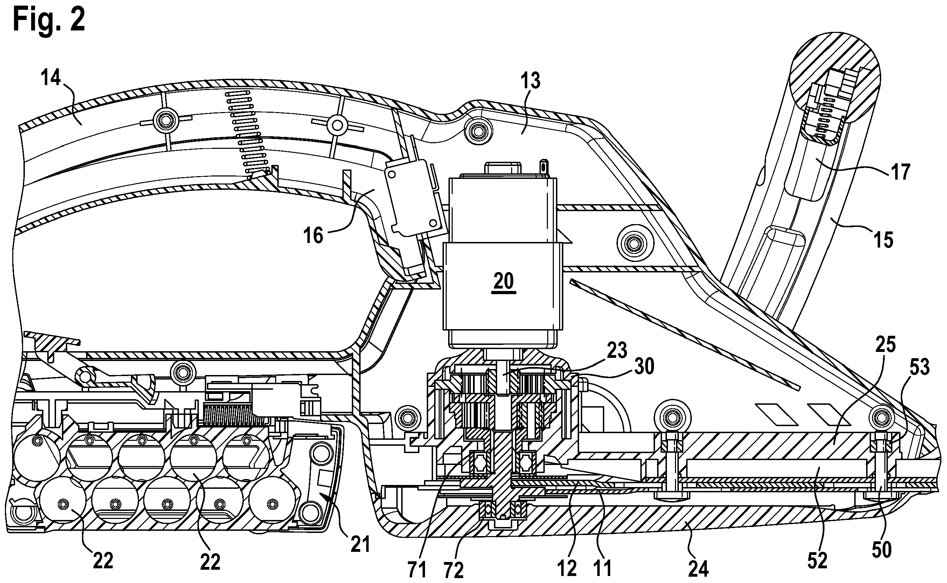

A conventional type hedgecutter is illustrated in Figure 1 and described above. An embodiment of a cutting tool in accordance with the present invention in the form of a hedgecutter is shown in Figures 2 to 7, with the same reference numerals being used as in Figure 1 where appropriate. The embodiment shown is of the cordless type of hedgecutter in which electrical power to a permanent magnet motor 20 is provided by demountable battery-pack 21, suitably of Li-ion battery cells 22. Motor 20 has a small diameter motor output shaft 23.

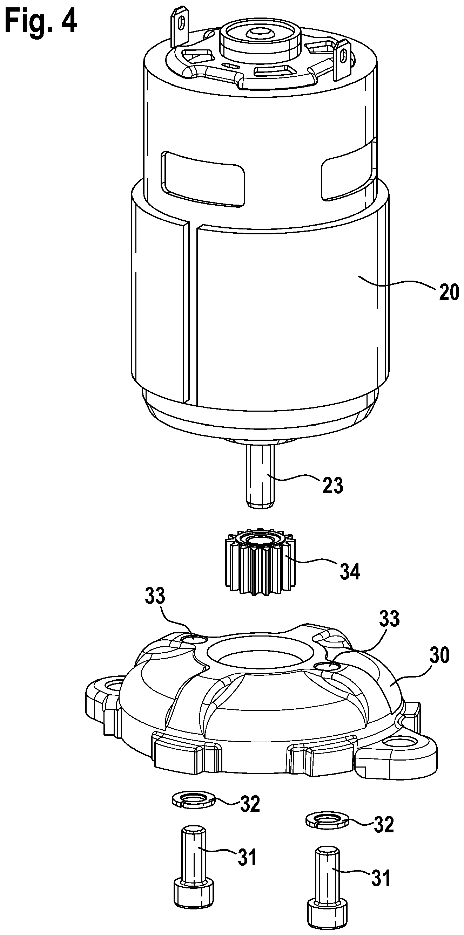

A lower housing unit in the form of a cover 24 provides protection for the drive assembly from ingress of vegetation. The drive assembly also includes an upper housing unit 25 providing a mount for upper and lower blades 11, 12 and, in combination with upper gearbox housing member 30, a housing for a gear assembly as will be described in further detail below. Upper gearbox housing 30 is mounted on motor 20 by means of mounting bolts 31 which pass through split washers 32 and apertures 33 in housing 30 and are secured in suitable threaded apertures in the motor 20 housing (Figure 4).

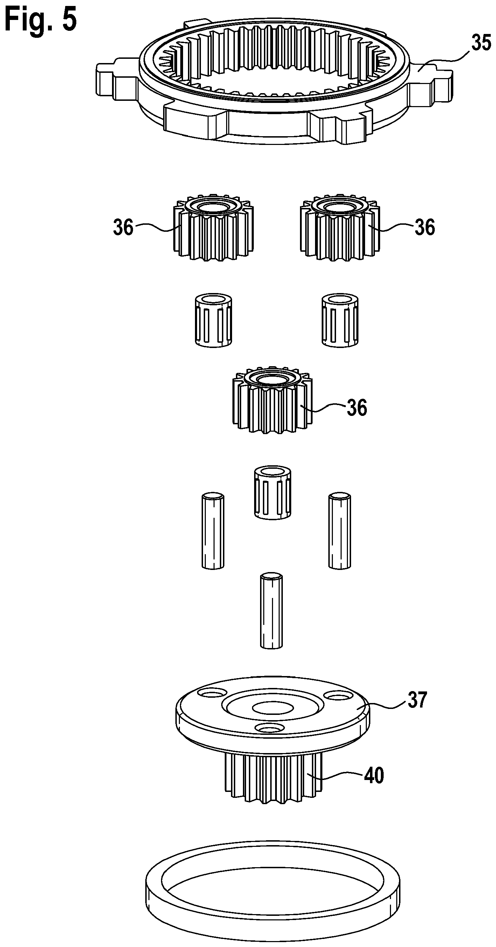

In accordance with the present invention, the hedgecutter has a planetary or epicylic gearbox. We will describe a two-stage planetary gearbox. Output shaft 23 of motor 20 is provided with a gear 34 forming the sun gear of the first stage of the planetary gear box avoiding the overhang loadings of spur gear design. The first stage of the gearbox includes rotationally fixed ring gear 35 within which planet gears 36 carried by planet carrier 37 rotate (Figure 5).

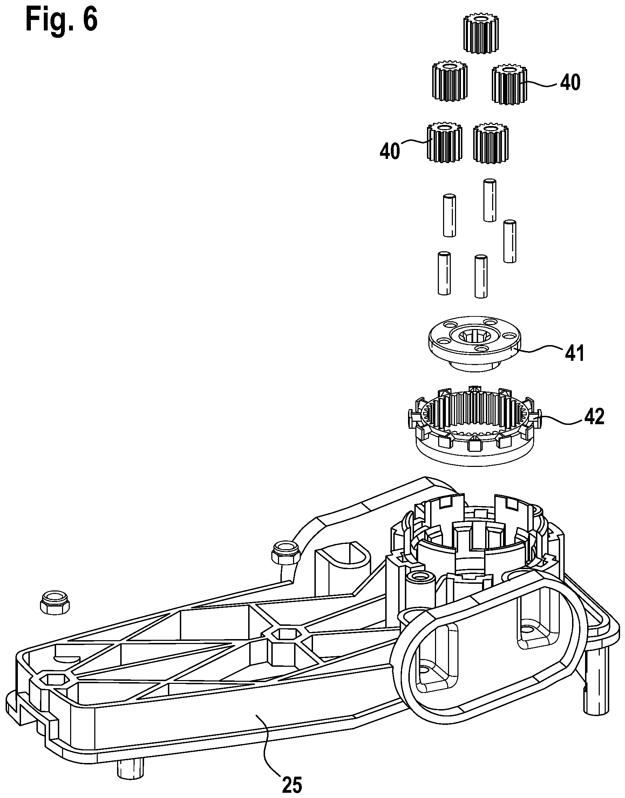

Planet carrier 37 carries a further gear 40 which acts, in turn, as the sun gear for the second or output stage of the two-stage planetary gearbox through second stage planet gears 40 carried by second stage planet carrier 41 within rotationally fixed second stage ring gear 42 (Figure 6), rotationally fixed within upper housing unit 25. Upper gearbox housing member 30 is then secured to upper housing unit 25 by suitable means to enclose the gear assembly, thereby forming a planetary or epicyclic gearbox.

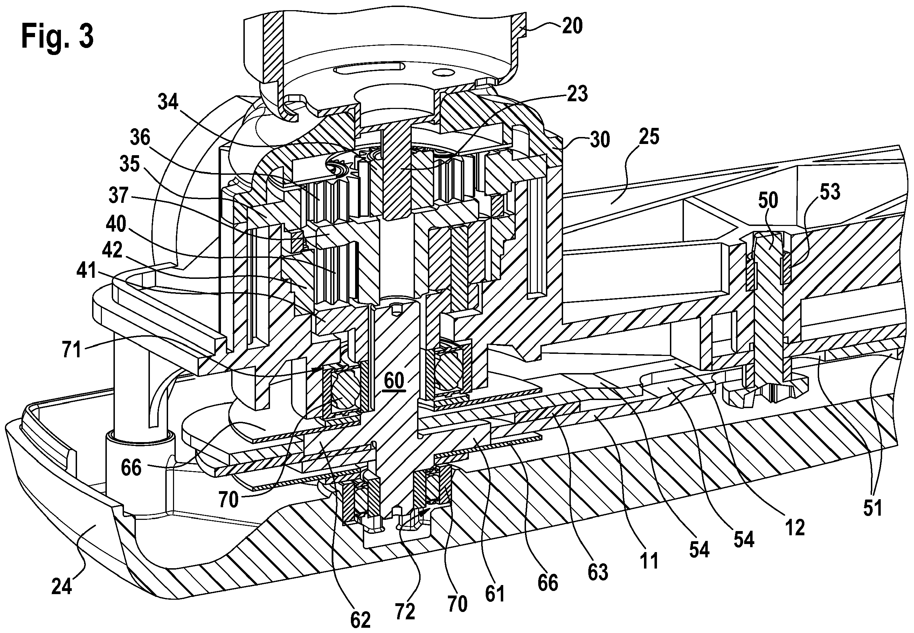

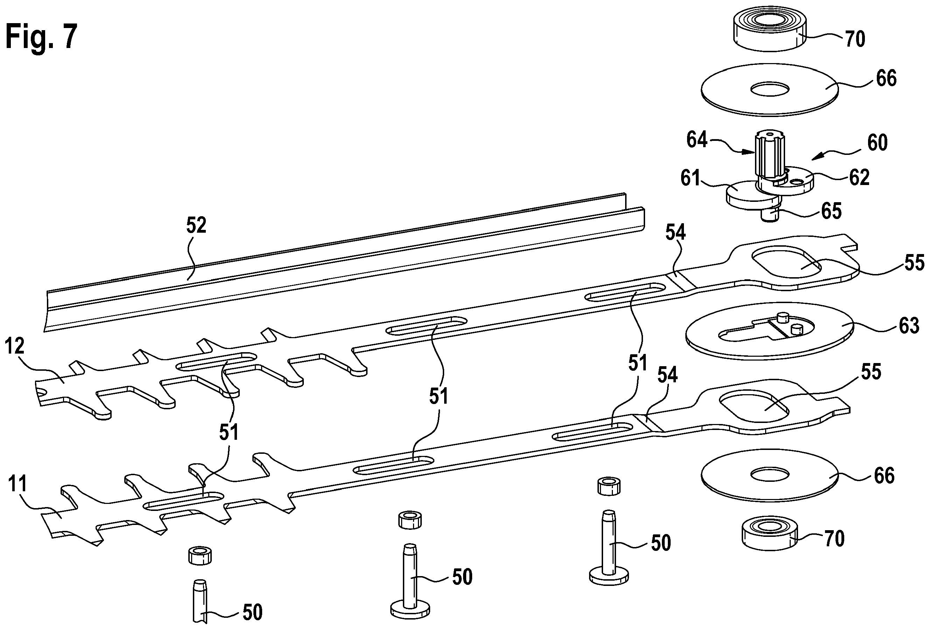

The blade assembly will now be described in further detail with particular reference to Figures 3 and 7. As described above, the embodiment described includes lower 11 and upper 12 blades, both of which are caused to reciprocate. Blades 11, 12 and a supporting bar 52 are secured to upper housing unit 25 by means of bolts 50 which pass through respective elongate slots 51 formed in each blade, supporting bar 52 (which supports the blades along substantially their entire length) and are retained by nuts 53 or other securing means. The blades each include a dog-leg portion 54 to allow the blades to be placed in a close face-to-face cutting orientation in the cutting portion of the blades but allow a space between the blades at the eccentric drive end of the blades so as to ensure each blade has a reliable engagement with its particular eccentric and minimise the possibility of one blade engaging both eccentrics simultaneously with consequent jamming of the mechanism.

Each blade includes an aperture or eye 55 which receives a respective eccentric disc. The eccentric drive includes a single-piece rotor 60 with two eccentrics 61, 62 associated with the lower and upper blades 11, 12 respectively. Lower and upper blade eccentrics are formed at 180° to each other. Rotation of the rotor 60 by motor 20 through the gearbox imparts linear motion to the blades by the action of eccentrics 61, 62 on the surfaces of apertures 55. A spacer 63, typically of a plastics material, is interposed between the blades 11, 12 and rotates with the rotor, retaining each blade on its intended eccentric.

Rotor 60 includes an axial shaft providing upper and lower shaft portions 64, 65 each for receipt of a respective washer 66 and a respective bearing 70. Bearings 70 are advantageously rolling element bearings, suitably of the ball-bearing type, and are pressed onto the respective shaft portions, thereby retaining the blades 11, 12 in the correct configuration and forming a blade assembly. This arrangement allows blades 11, 12, spacer 63, rotor 60, washers 66 and bearings 70 to be formed as a demountable blade unit. This provides an easy means for quick switching of the blades, for example, when a repair is necessary. The apparatus is thus more easily adapted for repair by the user.

Bearings 70 are supported in respective supports in the upper housing unit 25 and lower housing unit (cover) 24 and are allowed a degree of axial movement to allow the blade assembly to 'float' within the housings, providing upper and lower float clearances 71,72 respectively, between the housing and the respective bearings 70. Floating of the blade assembly reduces any pre-loading on the blades, which would otherwise contribute to frictional losses. As a consequence run times per battery charge for a cordless product are increased. Advantageously float clearances of about 0.5mm can be achieved.

As shown, upper shaft portion 64 is advantageously splined and mates with a corresponding female spline formed on an inner surface of second stage planet carrier 41. This splined arrangement allows axial movement of rotor 60 with respect to planetary carrier 41 thus maintaining the ability of the blade assembly to float, thereby further minimising preloading, even in combination with a planetary gearbox. Additionally or alternatively, the planetary carrier 41 may be permitted axial movement within the planetary gear output stage.

In the design of hedgetrimmer in accordance with the present invention, rotor 60 is suitably formed with a shaft diameter of about 6mm or more, readily allowing an eccentricity of about 12.8mm to 17mm or more from an eccentric having a diameter of 20mm. In the case of a hedgetrimmer having two reciprocable blades, this provides a blade-to-blade movement of 25.6mm to 34mm which, after deduction of the tooth thickness, will enable vegetation of up to 20mm diameter to be cut.

In a cordless product, the construction of the present invention allows the use of a more powerful motor than is otherwise typically the case as the lack of side loading enables a conventional small motor output shaft diameter to deliver significantly higher outputs without failure. Preloading, and hence frictional loss, is minimised by the splined connection between the blade assembly and the final stage planet carrier and/or by the ability of the final stage planet carrier to move axially so enabling the blade assembly to float between the upper and lower housing units 25, 24. As a result, a cutting tool having a higher power output with greater torque and therefore considerably enhanced cutting forces can be achieved.

The present invention is suitable for both corded (mains electricity powered) and cordless (battery-powered) tools but finds particular application in cordless apparatus as the reduced frictional losses allow increased run-times per battery charge.

## Claims

1. A cutting apparatus (10) comprising a housing, a blade assembly comprising at least one reciprocatable blade (11, 12) and an eccentric rotor (60) comprising an eccentric (61, 62) associated with each of said at least one reciprocatable blade (11, 12); and an electric motor (20) adapted to drive said eccentric rotor (60); wherein the apparatus (10) further comprises a planetary gear adapted to transfer motion to the eccentric rotor (60); wherein the eccentric rotor (60) comprises a shaft having upper and lower shaft portions (64, 65) carrying each of said eccentrics (61, 62) therebetween; **characterised in that** the eccentric rotor (60) includes a bearing (70) on each of the upper and lower shaft portions (64, 65); and wherein the at least one reciprocatable blade (11, 12), rotor (60) and bearings (70) are formed as a demountable blade unit.

2. A cutting apparatus as claimed in claim 1, wherein the housing is adapted to support the bearings (70) and permit axial movement of the eccentric rotor (60) within the housing.

3. A cutting apparatus as claimed in claim 1 or claim 2 wherein the bearings (70) are rolling element bearings.

4. A cutting apparatus as claimed in any preceding claim wherein the bearings (70) are pressed on to the respective shaft portions (64, 65).

5. An apparatus as claimed in any preceding claim wherein the eccentric rotor (60) is formed as a single piece rotor.

6. An apparatus as claimed in any preceding claim wherein the planetary gear includes an output element (41) which output element and upper shaft portion (64) of rotor (60) include mutually cooperating male and female spline elements.

7. An apparatus as claimed in claim 6 wherein the upper shaft portion (64) of rotor (60) includes a male spline element and the output element (41) includes a female spline element.

8. An apparatus as claimed in claim 6 or claim 7 wherein the male and female spline elements are adapted to allow axial movement therebetween.

9. An apparatus as claimed in any preceding claim wherein the planetary gear is a multiple stage planetary gear, preferably a two-stage planetary gear.

10. An apparatus as claimed in claim 9 wherein the planetary gear has an output stage having a planetary carrier (41) permitted axial movement within the planetary gear output stage.

11. An apparatus as claimed in any preceding claim further comprising a battery (22) adapted to supply power to the motor.

12. An apparatus as claimed in any preceding claim wherein the motor (20) is a permanent magnet DC motor.

13. An apparatus as claimed in any preceding claim in the form of a hedge trimmer or hedge cutter.

## Patentansprüche

1. Schneidegerät (10), das ein Gehäuse, eine mindestens eine hin- und herbewegbare Klinge (11, 12) umfassende Klingenanordnung und einen exzentrischen Rotor (60), der einen jeder der mindestens einen hin-und herbewegbaren Klinge (11, 12) zugeordneten Exzenter (61, 62) sowie einen Elektromotor (20) umfasst, der ausgeführt ist, um den exzentrischen Rotor (60) anzutreiben, wobei das Gerät (10) weiterhin ein Planetengetriebe umfasst, das ausgeführt ist, um Bewegung auf den exzentrischen Rotor (60) zu übertragen, wobei der exzentrische Rotor (60) eine Welle mit oberen und unteren Wellenabschnitten (64, 65) hat, die jeden der dazwischen befindlichen Exzenter (61, 62) tragen, **dadurch gekennzeichnet, dass** der exzentrische Rotor (60) ein Lager (70) an jedem der oberen und unteren Wellenabschnitte (64, 65) beinhaltet, und wobei die mindestens eine hin- und herbewegbare Klinge (11, 12), der Rotor (60) und die Lager (70) als eine demontierbare Klingeneinheit ausgebildet sind.

2. Schneidegerät nach Anspruch 1, bei dem das Gehäuse ausgeführt ist, um die Lager (70) abzustützen und eine axiale Bewegung des exzentrischen Rotors (60) innerhalb des Gehäuses zuzulassen.

3. Schneidegerät nach Anspruch 1 oder Anspruch 2, bei dem die Lager (70) Wälzlager sind.

4. Schneidegerät nach einem der vorstehend aufgeführten Ansprüche, bei dem die Lager (70) auf die jeweiligen Wellenabschnitte (64, 65) aufgepresst sind.

5. Gerät nach einem der vorstehend aufgeführten Ansprüche, bei dem der exzentrische Rotor (60) als ein Einzelstückrotor ausgebildet ist.

6. Gerät nach einem der vorstehend aufgeführten Ansprüche, bei dem das Planetengetriebe ein Ausgabeelement (41) beinhaltet, wobei das Ausgabeelement und der obere Wellenabschnitt (64) des Rotors (60) miteinander zusammenwirkende außen- und innenverzahnte Kerbverzahnungselemente beinhalten.

7. Gerät nach Anspruch 6, bei dem der obere Wellenabschnitt (64) des Rotors (60) ein außenverzahntes Kerbverzahnungselement und das Ausgabeelement (41) ein innenverzahntes Kerbverzahnungselement beinhaltet.

8. Gerät nach Anspruch 6 oder Anspruch 7, bei dem die außen- und innenverzahnten Kerbverzahnungselemente ausgeführt sind, um dazwischen eine axiale Bewegung zuzulassen.

9. Gerät nach einem der vorstehend aufgeführten Ansprüche, bei dem das Planetengetriebe ein Mehrstufenplanetengetriebe, vorzugsweise ein Zweistufenplanetengetriebe, ist.

10. Gerät nach Anspruch 9, bei dem das Planetengetriebe eine Ausgabestufe mit einem Planetenträger (41) hat, um eine axiale Bewegung innerhalb der Planetengetriebeausgabestufe zuzulassen.

11. Gerät nach einem der vorstehend aufgeführten Ansprüche, das weiterhin eine Batterie (22) umfasst, die ausgeführt ist, um den Motor mit Strom zu versorgen.

12. Gerät nach einem der vorstehend aufgeführten Ansprüche, bei dem der Motor (20) ein Dauermagnetgleichstrommotor ist.

13. Gerät nach einem der vorstehend aufgeführten Ansprüche in der Form einer Heckenschere oder eines Heckenschneidegeräts.

## Revendications

1. Appareil de coupe (10) comprenant un boîtier, un ensemble de lame comprenant au moins une lame réciproque (11, 12) et un rotor excentrique (60) comprenant un excentrique (61, 62) associé à chacune de ladite au moins une lame réciproque (11, 12); et un moteur électrique (20) apte à entraîner ledit rotor excentrique (60); dans lequel l'appareil (10) comprend en outre un engrenage planétaire apte à transférer un mouvement au rotor excentrique (60); dans lequel le rotor excentrique (60) comprend un arbre présentant des parties d'arbre supérieure et inférieure (64, 65) portant chacun desdits excentriques (61, 62) entre elles; **caractérisé en ce que** le rotor excentrique (60) comprend un palier (70) sur chacune des parties d'arbre supérieure et inférieure (64, 65); et dans lequel ladite au moins une lame réciproque (11, 12), le rotor (60) et les paliers (70) sont formés comme une unité de lame démontable.

2. Appareil de coupe selon la revendication 1, dans lequel le boîtier est apte à supporter les paliers (70) et à permettre un déplacement axial du rotor excentrique (60) à l'intérieur du boîtier.

3. Appareil de coupe selon la revendication 1 ou la revendication 2, dans lequel les paliers (70) sont des paliers à éléments roulants.

4. Appareil de coupe selon l'une quelconque des revendications précédentes, dans lequel les paliers (70) sont pressés sur les parties d'arbre respectives (64, 65).

5. Appareil selon l'une quelconque des revendications précédentes dans lequel le rotor excentrique (60) est formés comme un rotor d'une seule pièce.

6. Appareil selon l'une quelconque des revendications précédentes, dans lequel l'engrenage planétaire comprend un élément de sortie (41), ledit élément de sortie et la partie d'arbre supérieure (64) du rotor (60) comprennent des éléments de cannelure mâle et femelle coopérant mutuellement.

7. Appareil selon la revendication 6, dans lequel la partie d'arbre supérieure (64) du rotor (60) comprend un élément de cannelure mâle, et l'élément de sortie (41) comprend un élément de cannelure femelle.

8. Appareil selon la revendication 6 ou la revendication 7, dans lequel les éléments de cannelure mâle et femelle sont aptes à permettre un déplacement axial entre eux.

9. Appareil selon l'une quelconque des revendications précédentes dans lequel l'engrenage planétaire est un engrenage planétaire à étages multiples, de préférence un engrenage planétaire à deux étages.

10. Appareil selon la revendication 9, dans lequel l'engrenage planétaire comprend un étage de sortie présentant un support planétaire (41) pouvant exécuter un déplacement axial à l'intérieur de l'étage de sortie de l'engrenage planétaire.

11. Appareil selon l'une quelconque des revendications précédentes, comprenant en outre une batterie (22) apte à fournir de la puissance au moteur.

12. Appareil selon l'une quelconque des revendications précédentes, dans lequel le moteur (20) est un moteur à courant continu à aimant permanent.

13. Appareil selon l'une quelconque des revendications précédentes sous la forme d'un taille-haie ou d'un coupe-haie.
